# EUROPEAN PATENT SPECIFICATION

(11) **EP 3 208 029 B1**
(45) Date of publication and mention of the grant of the patent: **27.01.2021**
(21) Application number: 16156087.5
(22) Date of filing: 17.02.2016
(51) Int. Cl.: B23K 101/00, F01D 11/08, F01D 25/00, F01D 25/24, B23K 35/30, B32B 15/01, F01D 5/00, B23P 6/00

(54) **STEAM TURBINE INNER CASING COMPONENT AND REPAIR METHOD THEREFOR**
INNENGEHÄUSEKOMPONENTE EINER DAMPFTURBINE UND REPARATURVERFAHREN DAFÜR
COMPOSANT DE BOÎTIER INTERNE DE LA TURBINE À VAPEUR ET SON PROCÉDÉ DE RÉPARATION

(43) Date of publication of application: 23.08.2017
(73) Proprietor: General Electric Technology GmbH, 5400 Baden (CH)
(72) Inventor: Weidemann, Kornelia, 5400 Baden (CH)
(74) Representative: BRP Renaud & Partner mbB Rechtsanwälte Patentanwälte Steuerberater

(56) References cited:
- WO-A1-2015/121936
- CA-A- 894 713
- DE-A1- 3 030 924
- US-A- 4 609 577
- US-A- 5 735 045

## Description

### TECHNICAL FIELD

The present disclosure relates generally to steam turbines inner casing components and more specifically to the material composition, construction and repair methods therefor.

### BACKGROUND INFORMATION

Nodular Cast Iron such as brittle cast iron grade EN-GJS-400-15 or GGG-40 is a common material used to manufacture some inner casings of low pressure steam turbines used in power generation. Such machines may over time experience water droplet erosion in the inner casings, particularly in regions diagonally opposite the tip of last stage rotating blades where condensed steam is typically centrifuged from the last stage blades to the inner casing at the tip region of the last stage blade so as to impact and erode the inner casing. While the same phenomena may occur at other upstream turbine stages, the problem is greatest at the last stage as this region typically has the highest concentration of condensation.

A known material suitable for welding is work hardening stainless steels. The advantage of this type of material is that when applied it is soft and ductile with a hardness of 200 Brindell, making it suitable for welding. Nonetheless under impact and/or compressive abrasion, the hardness of the material may be increased, by the formation of martensite, up to 500 Brindell. Up until now it was believed that conditions within a steam turbine would not provide the required cold work hardened the material thus leaving the material susceptible to abrasion and erosion.
In US patent US 4,609,577, a method of producing a weld overlay on a ferrous base metal surface, by applying to the surface by electric arc welding a plurality of layers of an austenitic stainless steel filler of specific composition, and providing a flux which produces a substantially fully austenitic overlay at least in the uppermost layer is suggested. The overlay has improved machinability, metal-to-wear resistance and corrosion resistance, and the capability of work hardening.

In US patent 5,735,045 a method and apparatus for restoring the compressor rotor path rings of a jet engine according to which the rings are removed from the inner surface of the compressor housing and are installed into a jig is suggested. The rings are machined down a predetermined amount and a coating of wear-resistant material is applied to the outer surfaces. The rings are then reinstalled into the jig and machined down to the precise thickness after which they are installed into the compressor housing.

### SUMMARY

Provided is a use of a cladding and a method for repairing a cast iron low pressure steam turbine inner casing that forms a last stage of the steam turbine wherein the cladding addresses with the problem of water erosion.

It attempts to address this problem by means of the subject matter of the independent claims. Advantageous embodiments are given in the dependent claims.

One general aspect provides an inner casing component with a base, configured to form part of a steam flow path of a last stage of an axial flow in a low pressure steam turbine, that is made from cast iron and has a portion that has a cladding consisting of a work hardening material. The cladding consists of a work hardening austenitic steel, the cladding consisting of 0.05wt%-0.15wt% C, 18wt%-21 wt% Cr, 8%-10% Ni, 6.5wt%-7.5wt% Mn and remainder Fe..

In a yet further aspect the component of claim 1 is configured as an inner casing configured to circumscribe a last stage of an axial flow steam turbine, wherein the last stage comprises a stationary vane row and a downstream rotating blade row, and wherein the cladding is located so as to be in a region radially between the rotating blade row and the base when the axial flow steam turbine is in an assembled state.

In service the cladding may work harden as a result of water droplet impact to form a hardened surface that is resistant to erosion. While it is known that aggressive surface treatment such as surface treatment with hard objects may work harden certain materials, the unexpected effect of work hardening by water droplets characteristically found in the flow path of a steam turbine provides an unexpected advantage of using work hardening materials to clad and/or repair water droplet eroded steam turbine inner casing components.

In a further aspect, the last stage comprises a stationary vane row and a downstream rotating blade row wherein the cladding is located in a region radially between the rotating blade row and the base.

Another general aspect provides a method for manufacturing an inner casing component, having a base, configured to form part of a steam flow path of a last stage of an axial flow low pressure steam turbine, and made of cast iron. The method comprising the step of applying a cladding of manganese austenitic steel to the base in a region exposed to the steam flow path during operation. The cladding consists of 0.05wt%-0.15wt% C, 18wt%-21 wt% Cr, 8%-10% Ni, 6.5wt%-7.5wt% Mn and remainder Fe.

In a further aspect the region where the cladding is applied radially between a rotating blade row and the base.

In further aspect the method is a method for repairing erosion damage of the base.

It is a further object of the invention to overcome or at least ameliorate the disadvantages and shortcomings of the prior art or else provide a useful alternative.

Other aspects and advantages of the present disclosure will become apparent from the following description, taken in connection with the accompanying drawings which by way of example illustrate exemplary embodiments of the present invention.

### BRIEF DESCRIPTION OF THE DRAWINGS

By way of example, embodiments of the present disclosure are described more fully hereinafter with reference to the accompanying drawing, in which:
Figure 1 is a sectional view of a portion of a steam turbine to which an exemplary embodiment of the disclosure may be applied; and
Figure 2 is an expanded view of a section of Fig. 1 showing a cladding of an exemplary embodiment.

### DETAILED DESCRIPTION

Exemplary embodiments of the present disclosure are now described with references to the drawings, wherein like reference numerals are used to refer to like elements throughout. In the following description, for purposes of explanation, numerous specific details are set forth to provide a thorough understanding of the disclosure. However, the present disclosure may be practiced without these specific details, and is not limited to the exemplary embodiments disclosed herein.

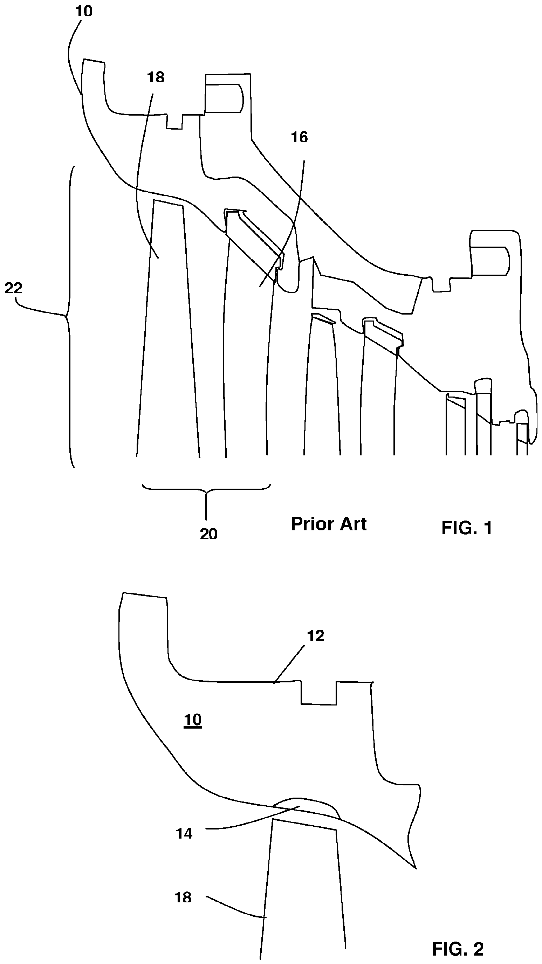

Fig. 1 shows a section of an axial flow steam turbine to which exemplary embodiments may be applied. Shown are an inner casing component 10, a steam flow path 22 and a last stage 20 comprising a stationary vane row 16 and a downstream rotating blade row 18.

The inner casing component 10 forms a radial outer limit of the axial steam flow path 22, thereby in part defining the axial steam flow path 22. The inner casing component 10 may additionally provide a carrier means for carrying one or more stationary vane rows 16. As shown in Fig. 1, the inner casing component 10 may form only a portion of the inner casing of the steam turbine. That is, the inner casing component 10 is one component of several components. Alternatively, the inner casing component 10 may define the inner casing of the steam turbine.

As shown in Fig. 1, contained within the axial steam flow path 22 are stationary vane rows 16 that are each followed downstream, that is an axial direction corresponding to the nominal flow direction or working fluid through the steam flow path 22, by rotating blade rows 18. The last vane row 16 / blade row 18 combination contained within the steam flow path 22 defines the last stage 22 of the turbine.

In an exemplary embodiment shown in Fig. 2, the inner casing component 10comprises a base 12 made of nodular cast iron and a cladding 14 that is located the base 12 in a region exposed to the steam flow path 22. The cladding 14 consists of manganese austenitic steel, which, in an exemplary embodiment, is defined by the code EN 1.4370.

In an exemplary embodiment the cladding 14 is located in a region radially between the rotating blade row 18 and the base 12, wherein the radial direction is defined at the direction perpendicular to the rotational axis of the rotating blade row 18.

Another exemplary embodiment relates to a method for manufacturing a steam turbine inner casing component 10 as shown in Fig. 2. The exemplary method involves applying a cladding 14 of manganese austenitic steel to the base 12 in a region exposed to the steam flow path 22 during operation, wherein, in an exemplary embodiment, the region is a location radially between the rotating blade row 18 and the base 12.

In an exemplary embodiment, the application is by my means of welding.

In further exemplary embodiment, the method is a method for repairing erosion damage of the base 12.

In an exemplary embodiment, the cladding (14) consists of <0.8 wt% C, >10% Cr, <2.5% Ni, <3.5% Mn and < 84wt% Fe. In another exemplary embodiment the cladding 14 consists of 0.05wt%-0.15wt% C, 18wt%-21 wt% Cr, 8%-10% Ni, 6.5wt%-7.5wt% Mn and remainder Fe.

Although the disclosure has been herein shown and described in what is conceived to be the most practical exemplary embodiments, it will be appreciated that the present disclosure can be embodied in other specific. The presently disclosed embodiments are therefore considered in all respects to be illustrative and not restricted. The scope of the disclosure is indicated by the appended claims rather that the foregoing description and all changes that come within the meaning and range and equivalences thereof are intended to be embraced therein.

### REFERENCE NUMBERS

- 10: casing component
- 12: base
- 14: cladding
- 16: vane
- 18: blade
- 20: stage
- 22: flow path

## Claims

1. An inner casing component (10), having a base (12), configured to form part of a steam flow path (22) of a last stage (20) of an axial flow in a low pressure steam turbine, made of cast iron, having a portion with cladding (14) consisting of a work hardening austenitic steel material, wherein the cladding (14) consists of 0.05wt%-0.15wt% C, 18wt%-21 wt% Cr, 8%-10% Ni, 6.5wt%-7.5wt% Mn and remainder Fe.

2. The component of claim 1 wherein the component is made of nodular cast iron.

3. The component of claim 1 is configured as an inner casing (10) configured to circumscribe a last stage (20) of an axial flow steam turbine,
wherein the last stage (20) comprises a stationary vane row (16) and a downstream rotating blade row (18), and
wherein the cladding (14) is located so as to be in a region radially between the rotating blade row (18) and the base (12) when the axial flow steam turbine is in an assembled state.

4. A method for repairing an inner casing component (10), having a base (12), configured to form part of a steam flow path (22) of a last stage (20) of an axial flow in a low pressure steam turbine, made of cast iron, the method comprising the step of applying a cladding (14) of work hardening austenitic steel to the base (12) in a region exposed to the steam flow path (22) during operation, wherein the cladding (14) consists of 0.05wt%-0.15wt% C, 18wt%-21 wt% Cr, 8%-10% Ni, 6.5wt%-7.5wt% Mn and remainder Fe.

5. The method of claim 4 wherein the last stage (20) comprises a stationary vane row (16) and a downstream rotating blade row (18) wherein the cladding (14) is applied to the inner casing component (10) in a location radially between the rotating blade row (18) and the base (12).

6. The method of claim 4 wherein the cladding (14) is applied my means of welding.

7. The method of claim 4 wherein the method is a method for repairing erosion damage of the base (12).

## Patentansprüche

1. Innengehäusekomponente (10) mit einer Basis (12), konfiguriert zum Bilden eines Teils eines Dampfströmungspfads (22) einer letzten Stufe (20) einer Axialströmung in einer Niederdruck-Dampfturbine, aus Gusseisen, mit einem Abschnitt mit Plattierung (14) bestehend aus einem kalthärtenden austenitischen Stahlwerkstoff, wobei die Plattierung (14) aus 0,05 Gew.-% - 0,15 Gew.-% C, 18 Gew.-% - 21 Gew.-% Cr, 8 % - 10 % Ni, 6,5 Gew.-% - 7,5 Gew.-% Mn und dem Rest Fe besteht.

2. Komponente nach Anspruch 1, wobei die Komponente aus Sphäroguss hergestellt ist.

3. Komponente nach Anspruch 1, die als ein Innengehäuse (10) konfiguriert ist, das konfiguriert ist, um eine letzte Stufe (20) einer Axialströmungs-Dampfturbine zu begrenzen, wobei die letzte Stufe (20) eine stationäre Leitschaufelreihe (16) und eine stromabwärtig rotierende Laufschaufelreihe (18) umfasst, und
wobei die Plattierung (14) so angeordnet ist, dass sie sich in einem Bereich radial zwischen der rotierenden Laufschaufelreihe (18) und der Basis (12) befindet, wenn sich die Axialströmungs-Dampfturbine in einem montierten Zustand befindet.

4. Verfahren zur Reparatur einer Innengehäusekomponente (10) mit einer Basis (12), die dazu konfiguriert ist, einen Teil eines Dampfströmungspfades (22) einer letzten Stufe (20) einer Axialströmung in einer Niederdruck-Dampfturbine zu bilden, aus Gusseisen, wobei das Verfahren den Schritt des Aufbringens einer Plattierung (14) aus kalthärtendem austenitischem Stahl auf die Basis (12) in einem Bereich umfasst, der dem Dampfströmungspfad (22) während des Betriebs ausgesetzt ist, wobei die Plattierung (14) aus 0,05 Gew.-% - 0,15 Gew.-% C, 18 Gew.-% - 21 Gew.-% Cr, 8 % -10 % Ni, 6,5 Gew.-% - 7,5 Gew.-% Mn und dem Rest Fe besteht.

5. Verfahren nach Anspruch 4, wobei die letzte Stufe (20) eine stationäre Leitschaufelreihe (16) und eine stromabwärtig rotierende Laufschaufelreihe (18) umfasst, wobei die Plattierung (14) an einer Stelle radial zwischen der rotierenden Laufschaufelreihe (18) und der Basis (12) auf die Innengehäusekomponente (10) aufgebracht wird.

6. Verfahren nach Anspruch 4, wobei die Plattierung (14) mittels Schweißen aufgebracht wird.

7. Verfahren nach Anspruch 4, wobei das Verfahren ein Verfahren zum Reparieren von Erosionsschäden der Basis (12) ist.

## Revendications

1. Composant de boîtier interne (10), ayant une base (12), configuré pour faire partie d'un trajet d'écoulement de vapeur (22) d'un dernier étage (20) d'un écoulement axial dans une turbine à vapeur à basse pression, constitué de fonte, ayant une partie avec un revêtement (14) composé d'un matériau en acier austénitique d'écrouissage, dans lequel le revêtement (14) se compose de 0,05 % en poids à 0,15 % en poids de C, 18 % en poids à 21 % en poids de Cr, 8 % à 10 % de Ni, 6,5 % en poids à 7,5 % en poids de Mn et le reste de Fe.

2. Composant selon la revendication 1 dans lequel le composant est constitué de fonte au graphite sphéroïdal.

3. Composant selon la revendication 1 est configuré en tant que boîtier interne (10) configuré pour circonscrire un dernier étage (20) d'une turbine à vapeur à écoulement axial, dans lequel le dernier étage (20) comprend une rangée d'aubes fixes (16) et une rangée de pales rotatives en aval (18), et
dans lequel le revêtement (14) se situe de façon à être dans une région radialement entre la rangée de pales rotatives (18) et la base (12) lorsque la turbine à vapeur à écoulement axial est dans un état assemblé.

4. Procédé de réparation d'un composant de boîtier interne (10), ayant une base (12), configuré pour faire partie d'un trajet d'écoulement de vapeur (22) d'un dernier étage (20) d'un écoulement axial dans une turbine à vapeur à basse pression, constitué de fonte, le procédé comprenant l'étape d'application d'un revêtement (14) d'acier austénitique d'écrouissage à la base (12) dans une région exposée au trajet d'écoulement de vapeur (22) pendant le fonctionnement, dans lequel le revêtement (14) se compose de 0,05 % en poids à 0,15 % en poids de C, 18 % en poids à 21 % en poids de Cr, 8 % à 10 % de Ni, 6,5 % en poids à 7,5 % en poids de Mn et le reste de Fe.

5. Procédé selon la revendication 4 dans lequel le dernier étage (20) comprend une rangée d'aubes fixes (16) et une rangée de pales rotatives en aval (18) dans lequel le revêtement (14) est appliqué au composant de boîtier interne (10) dans un emplacement radialement entre la rangée de pales rotatives (18) et la base (12).

6. Procédé selon la revendication 4 dans lequel le revêtement (14) est appliqué au moyen d'un soudage.

7. Procédé selon la revendication 4 dans lequel le procédé est un procédé de réparation d'un dommage d'érosion de la base (12).
